(19) Europäisches Patentamt
European Patent Office
Office européen des brevets

(11) **EP 4 738 822 A1**

(12) **EUROPEAN PATENT APPLICATION**
published in accordance with Art. 153(4) EPC

(43) Date of publication:
06.05.2026 Bulletin 2026/19

(21) Application number: 24863044.4

(22) Date of filing: 07.08.2024

(51) International Patent Classification (IPC):
$H04N\ 19/147^{(2014.01)}$     $H04N\ 19/119^{(2014.01)}$
$H04N\ 19/103^{(2014.01)}$     $H04N\ 19/70^{(2014.01)}$
$H04N\ 19/176^{(2014.01)}$     $H04N\ 19/117^{(2014.01)}$
$H04N\ 19/423^{(2014.01)}$     $H04N\ 19/85^{(2014.01)}$

(52) Cooperative Patent Classification (CPC):
H04N 19/103; H04N 19/117; H04N 19/119;
H04N 19/147; H04N 19/176; H04N 19/423;
H04N 19/70; H04N 19/85

(86) International application number:
PCT/KR2024/011684

(87) International publication number:
WO 2025/053462 (13.03.2025 Gazette 2025/11)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 05.09.2023 KR 20230117938

(71) Applicant: Samsung Electronics Co., Ltd.
Suwon-si, Gyeonggi-do 16677 (KR)

(72) Inventors:
• YOO, Kiwon
Suwon-si, Gyeonggi-do 16677 (KR)

• KANG, Wooseok
Suwon-si, Gyeonggi-do 16677 (KR)
• KIM, Doohyun
Suwon-si, Gyeonggi-do 16677 (KR)
• KIM, Minho
Suwon-si, Gyeonggi-do 16677 (KR)
• JI, Kumran
Suwon-si, Gyeonggi-do 16677 (KR)
• CHOI, Bumkwi
Suwon-si, Gyeonggi-do 16677 (KR)

(74) Representative: Appleyard Lees IP LLP
G Mill
Dean Clough Industrial Park
Halifax HX3 5AH (GB)

(54) **VIDEO ENCODING METHOD AND ELECTRONIC DEVICE**

(57) A method of encoding a video is provided. The method may include: partitioning an image frame into a coding tree unit (CTU); deciding prediction mode candidates of the coding tree unit by applying first low complexity rate-distortion optimization (LC-RDO), wherein the first LC-RDO includes applying a first correction value for correcting at least one of a rate, distortion, or rate-distortion cost; deciding a prediction mode from among the prediction mode candidates by applying second LC-RDO, wherein the second LC-RDO includes applying a second correction value for correcting at least one of the rate, distortion, or rate-distortion cost; and generating a bitstream based on the decided prediction mode.

FIG. 1

## Description

## Technical Field

The present disclosure relates to a video encoding method considering rate-distortion cost and an electronic device for encoding a video.

## Background Art

Video codecs divide video frames into smaller units through block partitioning and process and compress the divided units. As a key technology for a compression process of video codecs, rate-distortion optimization (RDO) is used. The RDO selects an optimal compression method from among various encoding modes by considering the trade-off between the bit rate and distortion of compressed data.

Meanwhile, high-performance video codecs require significant computational complexity to achieve high compression efficiency. However, in resource-constrained environments such as mobile devices, low computational complexity and power consumption become important considerations. Accordingly, low complexity rate-distortion optimization (LC-RDO) for efficient video data compression with low computational complexity is being used.

## Disclosure of Invention

## Solution to Problem

According to an aspect of the present disclosure, a method of encoding a video may be provided. The method may include partitioning an image frame into a coding tree unit (CTU). The method may include deciding prediction mode candidates of the coding tree unit by applying first low complexity rate-distortion optimization (LC-RDO). The first LC-RDO may include applying a first correction value for correcting at least one of a rate, distortion, or rate-distortion cost. The method may include deciding a prediction mode from among the prediction mode candidates by applying second LC-RDO. The second LC-RDO may include applying a second correction value for correcting at least one of the rate, distortion, or rate-distortion cost. The method may include generating a bitstream based on the decided prediction mode.

According to an aspect of the present disclosure, an electronic device for encoding a video may be provided. The electronic device may include memory storing one or more instructions; and one or more processors configured to execute the one or more instructions stored in the memory. The one or more processors may be configured to execute the one or more instructions to partition an image frame into a coding tree unit (CTU). The one or more processors may be configured to execute the one or more instructions to apply first low complexity rate-distortion optimization (LC-RDO) to decide prediction mode candidates of the coding tree unit. The first LC-RDO may include applying a first correction value for correcting at least one of a rate, distortion, or rate-distortion cost. The one or more processors may be configured to execute the one or more instructions to apply second LC-RDO to decide a prediction mode from among the prediction mode candidates. The second LC-RDO may include applying a second correction value for correcting at least one of the rate, distortion, or rate-distortion cost. The one or more processors may be configured to execute the one or more instructions to generate a bitstream based on the decided prediction mode.

According to an aspect of the present disclosure, a computer-readable recording medium storing a program for executing any one of the above-described methods or methods to be described below, for encoding a video, performed by an electronic device, may be provided.

## Brief Description of Drawings

FIG. 1 is a diagram illustrating an encoding process of an electronic device, according to an embodiment of the present disclosure.
FIG. 2A is a diagram for describing a concept of an encoding unit according to an embodiment of the present disclosure.
FIG. 2B is a diagram for describing a concept of an encoding unit according to an embodiment of the present disclosure.
FIG. 2C is a diagram for describing a recursive search operation for determining a partitioning structure of a block in an electronic device, according to an embodiment of the present disclosure.
FIG. 3 is a flowchart for describing an operation of encoding a video in an electronic device, according to an embodiment of the present disclosure.
FIG. 4A is a block diagram for describing an operation of calculating rate-distortion (RD) cost in general rate-distortion optimization (RDO).
FIG. 4B is a block diagram for describing an operation of calculating RD cost in general low complexity-rate-distortion optimization (LC-RDO).
FIG. 5A is a block diagram for describing an RD cost calculation operation in LC-RDO used by an electronic device according to an embodiment of the present disclosure.
FIG. 5B is a flowchart for describing an RD cost calculation operation in LC-RDO used by an electronic device, according to an embodiment of the present disclosure.
FIG. 6A is a block diagram for describing an RD cost calculation operation in LC-RDO used by an electronic device, according to an embodiment of the present disclosure.

FIG. 6B is a block diagram for describing an RD cost calculation operation in LC-LC-RDO used by an electronic device, according to an embodiment of the present disclosure.

FIG. 7 is a diagram for describing an operation of pre-calculating correction values of LC-RDO in an electronic device, according to an embodiment of the present disclosure.

FIG. 8 is a block diagram illustrating a configuration of an electronic device according to an embodiment of the present disclosure.

## Mode for the Invention

Terms used in this specification will be briefly described, and the present disclosure will be described in detail. In the present disclosure, the expression "at least one of a, b or c" indicates "a", "b", "c", "a and b", "a and c", "b and c", "all of a, b, and c", or variations thereof.

Although general terms being currently widely used were selected as terminology used in the present disclosure while considering the functions of the present disclosure, they may vary according to intentions of one of ordinary skill in the art, judicial precedents, the advent of new technologies, and the like. Also, terms arbitrarily selected by the applicant of the present disclosure may also be used in a specific case. In this case, their meanings will be described in detail in the detailed description of the present disclosure. Hence, the terms used in the present disclosure must be defined based on the meanings of the terms and the contents of the entire specification, not by simply stating the terms themselves.

The singular forms "a," "an," and "the" include plural referents unless the context clearly dictates otherwise. All terms used herein, including technical or scientific terms, have the same meaning as commonly understood by one of ordinary skill in the technical art written in the present specification. Also, in the present specification, although the terms including ordinal numbers, such as "first", "second", etc., may be used herein to describe various components, the components should not be limited by these terms. These terms are only used to distinguish one component from another.

In the entire specification, it will be understood that when a certain part "includes" a certain component, the part does not exclude another component but can further include another component, unless the context clearly dictates otherwise. In addition, the terms "portion", "part", "module", etc. used in this specification refer to a unit for processing at least one function or operation, which is implemented as hardware, software, or a combination of hardware and software.

Hereinafter, embodiments of the present disclosure will be described in detail with reference to the accompanying drawings so that the present disclosure may be readily implemented by one of ordinary skill in the technical field to which the present disclosure pertains.

However, the present disclosure is not limited to these embodiments and may be embodied in various other forms. In the drawings, parts irrelevant to the description are omitted to clearly describe the present disclosure, and like reference numerals refer to like elements throughout the specification.

Hereinafter, the present disclosure will be described in detail with reference to the accompanying drawings.

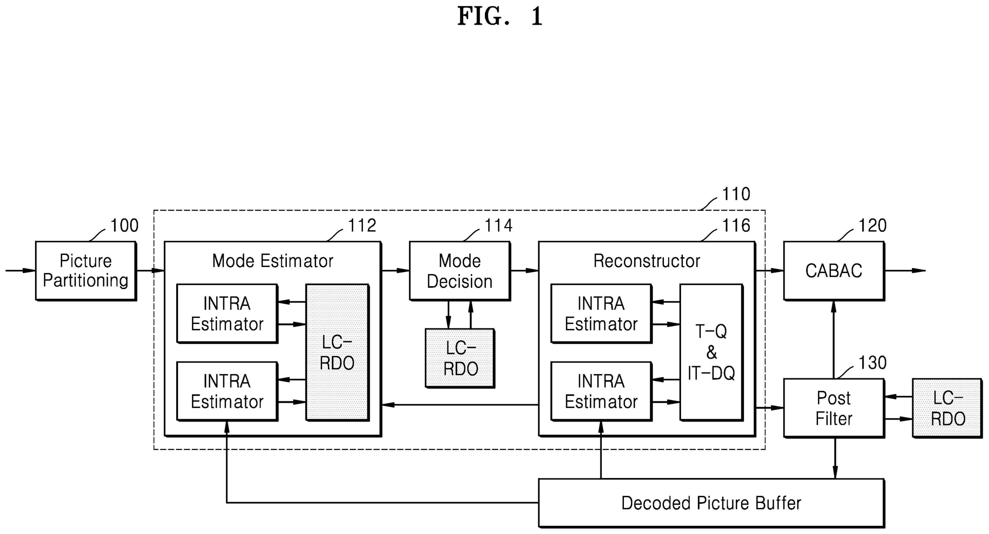

FIG. 1 is a diagram illustrating an encoding process of an electronic device according to an embodiment of the present disclosure.

In an embodiment, the electronic device may be various types of devices including a video encoder. For example, the electronic device may include a smartphone, a laptop, a desktop, a digital camera, a smart TV, a game console, etc. The electronic device may be a device capable of performing real-time video processing by providing functions, such as shooting, recording, and mirroring.

Meanwhile, the electronic device may be distinguished from a server capable of processing a large amount of data. The server may include relatively high-performance hardware compared to the electronic device, and accordingly, the server may perform optimal encoding using a complex and sophisticated compression algorithm. In contrast, the electronic device may have limitations in performance (e.g., storage space, processing speed, power consumption, etc.) of computing resources compared to the server. Accordingly, the electronic device may perform encoding using a relatively lightweight and fast compression algorithm.

Referring to FIG. 1, an encoding process of the electronic device may include at least picture partitioning 100, recursive search 110, Context-Adaptive Binary Arithmetic Coding (CABAC) 120, and a post filter (130) application operation.

The picture partitioning 100 may be an operation of partitioning an image into a plurality of block units to encode the image. For example, the image may be partitioned into a plurality of Coding Tree Units (CTUs) which are a plurality of blocks. Each CTU may be partitioned into a plurality of Coding Units (CUs) which are various types of sub blocks. Types of coding units may include Prediction Units (PUs) and Transform Units (TUs).

The recursive search 110 may be an operation of searching an optimal prediction mode of a block. A prediction mode represents how the prediction for a block is carried out. More specifically, a prediction mode in which a block of a current frame is predicted from a block of a previous frame and encoded may be an "inter mode". Also, a prediction mode in which prediction is performed based on other blocks in a current frame without comparison with a previous frame may be an "intra mode". The recursive search 110 may decide a type and encoding mode of a block by repeating a process of searching an optimal encoding mode of the block and searching an optimal encoding mode of a sub block partitioned from the corresponding block.

A mode estimator 112 may decide optimal prediction mode candidates in the recursive search 110. In this case, the mode estimator 112 may include an intra estimator and an inter estimator for performing intra prediction and inter prediction on an input block and deciding prediction mode candidates. In an operation of the mode estimator 112, Low Complexity Rate-Distortion Optimization (LC-RDO) may be applied to decide the prediction mode candidates. The present disclosure is characterized in that the electronic device uses a correction value to apply LC-RDO. The correction value used to apply LC-RDO will be described below.

In a mode decision block 114, a final prediction mode may be decided. The mode decision block 114 may decide a final prediction mode from among a plurality of prediction mode candidates decided by the mode estimator 112. In this case, LC-RDO may be applied to decide the final prediction mode.

A reconstructor 116 may perform encoding and decoding by using the prediction mode finally decided for the block.

The reconstructor 116 may include an intra compensator for predicting a current block in a video frame and an inter compensator for predicting a block of a current frame by using information of a previous frame. Also, an operation of the reconstructor 116 may include a transform-quantization (T-Q) process for encoding and an inverse transform-dequantization (IT-DQ) process for decoding.

The reconstructor 116 may generate pixel data of a syntax element and a reconstructed block to generate a bitstream through the encoding and decoding processes. The syntax element may be transferred to the CABAC (120) module to be binarized and used to generate a bitstream. Also, the reconstructed block may pass through the post filter 130 and then be stored in a buffer to be used as a reference frame for a next frame.

Meanwhile, Rate-Distortion Optimization (RDO) may be an optimization technology used in an encoding process. The RDO may achieve optimal compression efficiency by adjusting trade-off between a rate (bit rate) and distortion of a video. That is, the RDO may determine a rate and distortion that minimizes errors within a given bit rate tolerance. This may be expressed as Equation 1 below.

[Equation 1]

$$\min_{\{\theta\}} D$$

*subject to $R \leq R_t$*

Here, represents a group of coding parameters, D represents, as distortion after encoding, a difference (distortion) between an original image and a reconstructed image according to transformation and quantization, R represents a rate (a length of a bitstream) after encoding, and $R_t$ represents a target rate. That is, the RDO may minimize distortion when R is smaller than or equal to Rt.

In this case, an optimization coding parameter may be calculated by Equation 2 below.

[Equation 2]

$$\theta^* = \arg\min_{\{\theta\}} J,$$

*where $J = D + \lambda R$*

Here, J represents Rate-Distortion Cost (RD Cost) considering weights of a rate R and distortion D, and $\lambda$ is a Lagrangian multiplier as a coefficient depending on a quantization parameter.

In an embodiment, the electronic device may use LC-RDO which is relatively simple and fast, instead of RDO. As described above, the LC-RDO may be used to decide candidates of a prediction mode, a prediction mode, and a type mode of a post filter. Also, the electronic device may use a correction value that corrects at least one of a rate, distortion, or rate-distortion cost to improve compression performance of the LC-RDO. Detailed operations and encoding processes by which the electronic device uses a correction value to improve performance of the LC-RDO will be described in more detail with reference to the drawings described below.

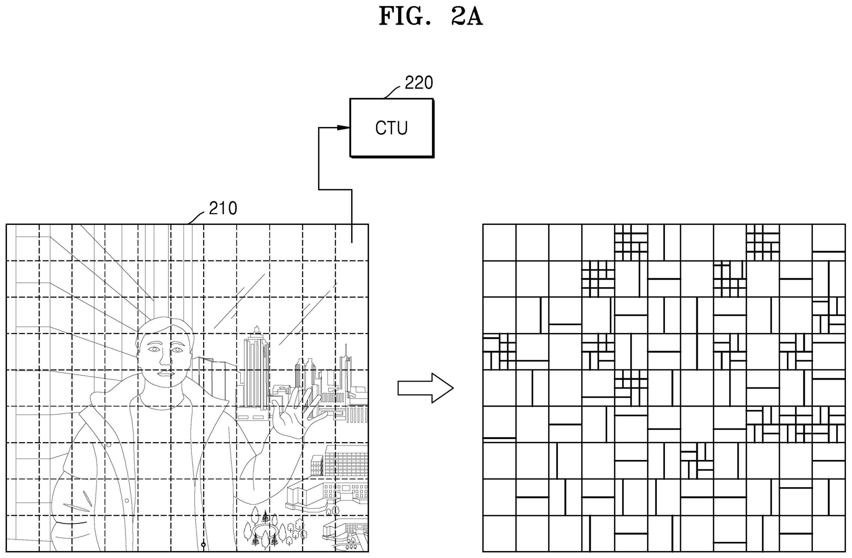

FIG. 2A is a diagram for describing a concept of an encoding unit according to an embodiment of the present disclosure.

In an embodiment, the electronic device may partition an image frame 210 into a plurality of CTUs 220 which are unit blocks of encoding. A size of a coding tree unit may have been defined in advance. For example, when the image frame 210 has a size of 352x288, the image frame 210 may be partitioned into 11x9 CTUs 220. In this case, each CTU 220 may have a size of 32x32. However, the size of each CTU 220 is not limited thereto. For example, the size of each CTU 220 may be 64x64, 128x128, etc.

In an embodiment, each CTU 220 may be partitioned into CUs which are a plurality of sub blocks. Each CTU 220 may be transformed into CUs, which are various types of sub blocks, through the recursive search process described above with reference to FIG. 1.

A CU may be divided into a Prediction Unit (PU) and a Transform Unit (TU). The PU may be a unit used to predict motion in an inter mode. The PU may include a prediction mode and motion vector information, and may be used to perform prediction using information of a previous frame based on the prediction mode and motion vector and calculate a residue between a predicted block and an actual block to generate compressed data. The TU may be a unit used to compress data by performing transformation in an intra mode. The TU may be used to transform data into a frequency domain by applying a transform matrix. In this case, Discrete Cosine Transform (DCT) may be performed. However, the present disclosure is not limited thereto.

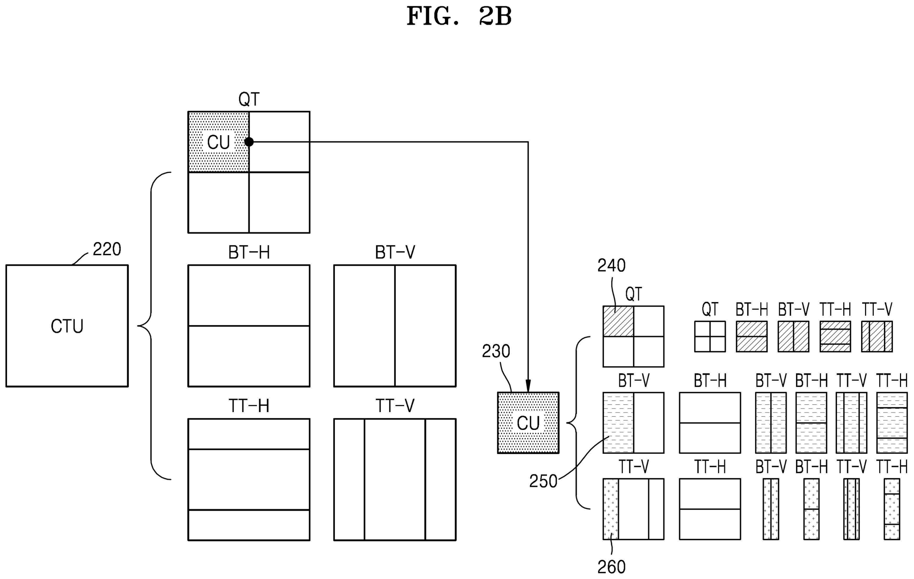

FIG. 2B is a diagram for describing a concept of an encoding unit according to an embodiment of the present disclosure.

Referring to FIG. 2B, a CTU 220 may be partitioned into CUs 230 which are a plurality of sub-blocks. The CTU 220 may be partitioned by various methods. A block partitioning method may include Binary-Tree (BT), Ternary Tree (TT), Quad-Tree (QT), etc.

BT partitioning may be a method of partitioning a CU 230 into two sub-rectangles. The BT partitioning may be classified into BT-H and BT-V depending on vertical/horizontal partitioning. TT partitioning may be a method of partitioning a CU 230 into three sub-rectangles. The TT partitioning may be classified into TT-H and TT-V depending on vertical/horizontal partitioning. QT partitioning may be a method of partitioning a CT 230 into fourth sub-rectangles.

A CTU 220 having a size of 32x32 may be QT partitioned to become CUs 230 each having a size of 16x16. In an embodiment, each of sub-blocks obtained by partitioning each CU 230 may be additionally partitioned until reaching a minimum block size. For example, a sub block 240 having a size of 8x8 and QT partitioned may be further partitioned into the form of QT, BT-H, BT-V, TT-H, or TT-V. For example, a sub block 250 having a size of 8x16 and BT partitioned may be further partitioned into the form of BT-V, BT-H, TT-V, or TT-H. For example, a sub block 260 having a size of 4x16 and TT partitioned may be further partitioned into the form of BT-V, BT-H, TT-V, or TT-H.

In an embodiment, the electronic device may apply the LC-RDO that uses a correction value to determine a partitioning structure of a block.

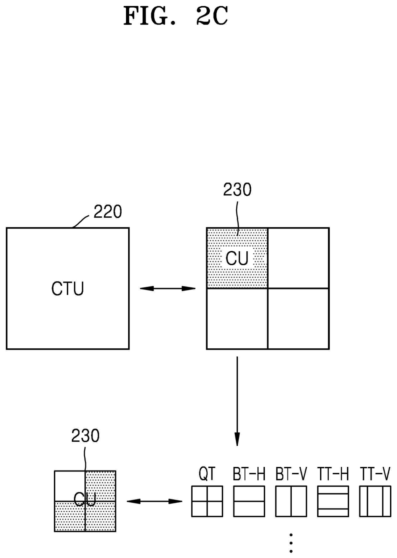

FIG. 2C is a diagram for describing a recursive search operation for determining a partitioning structure of a block in an electronic device according to an embodiment of the present disclosure.

In an embodiment, the electronic device may determine whether to partition a CTU 220 into a plurality of CUs 230. After a prediction mode is decided based on application of the LC-RDO (or RDO) for the CTU (220) block, the electronic device may store RD cost of the CTU (220) block before partitioning and then partition the CTU 220 into CUs 230. After a prediction mode is decided based on application of the LC-RDO (or RDO) for each CU 230, the electronic device may store RD cost of the CU (230) block after partitioning. The electronic device may compare the RD cost of the CTU (220) block before partitioning with the RD cost of the CU (230) block after partitioning and determine whether to partition the block. For example, when the RD cost of the CTU (220) block before partitioning is higher than the RD cost of the CU (230) block after partitioning, the electronic device may partition the CTU (220) block into the CU (230) block.

Meanwhile, a determination of whether to partition the block may be recursively searched and repeated. More specifically, for example, whether to additionally partition the partitioned CU (230) block into sub blocks may be determined. The electronic device may repeatedly perform partitioning of blocks (sub-blocks) by comparing RD cost of the blocks (or sub-blocks) before partitioning with RD cost of blocks (or sub-blocks) after partitioning. Also, in this case, while a block is partitioned, a type of the block may be decided and an optimal prediction mode corresponding to the type of the block may be decided. The recursive search process described above may involve performing LC-RDO using a correction value in the electronic device. Hereinafter, LC-RDO using a correction value, performed by the electronic device according to the present disclosure, will be described in more detail.

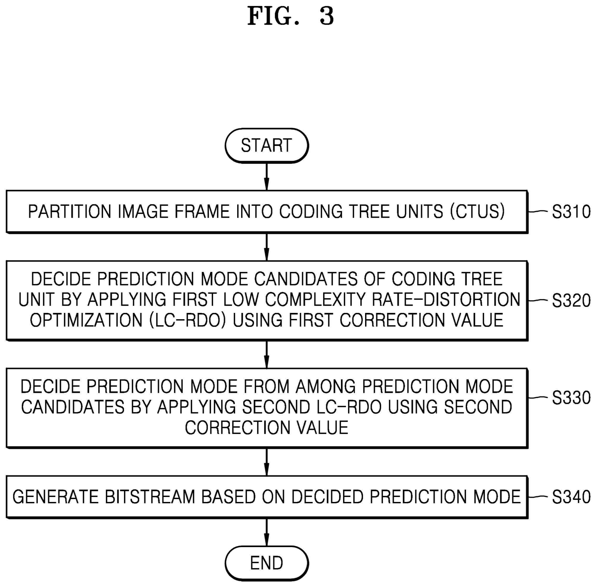

FIG. 3 is a flowchart for describing an operation of encoding a video in an electronic device according to an embodiment of the present disclosure.

In operation S310, the electronic device may partition an image frame into CTUs. The electronic device may partition the image frame into a plurality of CTUs and perform the following operations to decide a prediction mode for each CTU. An example of deciding a prediction mode for a CTU will be described with reference to FIG. 3. However, the following description may be applied in the same way to blocks partitioned from a CTU.

In operation S320, the electronic device may decide prediction mode candidates of a coding tree unit by applying first LC-RDO using a first correction value.

In an embodiment, the electronic device may decide optimal prediction mode candidates through intra prediction and inter prediction on an input CTU. In this case, each of an intra prediction mode and an inter prediction mode may include a plurality of modes.

The electronic device may apply the first LC-ROD to decide prediction mode candidates from among the plurality of modes. The first LC-RDO may correspond to LC-RDO included in operations of the mode estimator shown in FIG. 1.

The electronic device may perform the first LC-RDO of calculating RD cost for each of available prediction modes and deciding prediction mode candidates capable of minimizing RD cost.

In this case, the electronic device may apply the first correction value before comparing RD cost of the available prediction modes with each other. The first correction value may represent a correction value applied in the first LC-RDO. The first correction value may be a value for correcting at least one of a rate R, distortion D, or rate-distortion cost (RD cost). For example, the first correction value may be values that correct R and D. Alternatively, the first correction value may be values that correct RD cost.

The electronic device may decide one or more prediction modes capable of minimizing RD cost as prediction mode candidates based on a result of the first LC-RDO to which the first correction value is applied.

In operation S330, the electronic device may decide a prediction mode from among the prediction mode candidates by applying second LC-RDO using a second correction value. The second LC-RDO may correspond to LC-RDO used in the mode decision block shown in FIG. 1.

The electronic device may perform the second LC-RDO for calculating RD cost for each of the prediction mode candidates and deciding a final prediction mode capable of minimizing RD cost.

In this case, the electronic device may apply the second correction value before comparing RD cost of the prediction mode candidates with each other. The second correction value may be a correction value applied in the second LC-RDO. The second correction value may be a value for correcting at least one of R, D, or RD COST. For example, the second correction value may be values that correct R and D. Alternatively, the second correction value may be values that corrects RD cost.

The electronic device may decide a final prediction mode of minimizing RD cost from among the prediction mode candidates based on a result of the second LC-RDO to which the second correction value is applied.

In operation S340, the electronic device may generate a bitstream based on the decided prediction mode.

In an embodiment, the electronic device may perform encoding-decoding by using the prediction mode finally decided. The encoding may include a transform-quantization (T-Q) process and the decoding may include an inverse transform-dequantization (IT-DQ) process. The electronic device may generate pixel data of a syntax element and a reconstructed block for generating a bitstream through the encoding-decoding process. The syntax element may be transferred to the CABAC module to be binarized. The CABAC module may perform context modeling which calculates probability of possible values of a current bit by analyzing a previous bit and an encoded bit pattern, context adaptive binarization which converts the current bit to 0 or 1 based on a result of the context modeling, and binary arithmetic coding which encodes the bit and generates a bitstream. Additionally, the reconstructed block may be stored in a buffer to be used as a reference frame for a next frame after passing through the post filter.

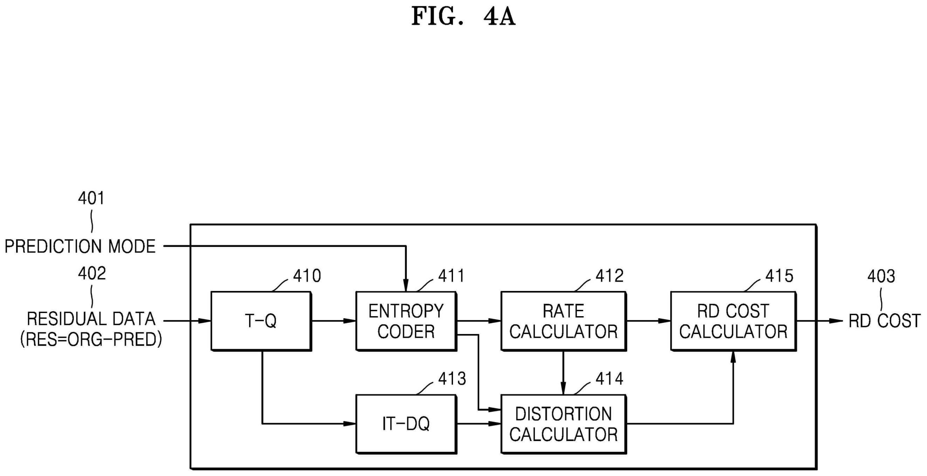

FIG. 4A is a block diagram for describing an operation of calculating RD cost in general RDO.

Referring to FIG. 4A, blocks representing modules for calculating RD cost 403 in general RDO are shown. In the general RDO process, the RD cost 403 may be calculated based on a prediction mode 401 and residual data (RES) 402. The residual data (RES) 402 may be obtained by subtracting prediction data (PRED) from original data (ORG) (RES=ORG-PRED).

A transform-quantization block (T-Q) 410 may transform the residual data 402 and quantize the residual data 402. The transformation may transform pixel data from a spatial domain to a frequency domain, and any known transform technique (for example, Discrete Cosine Transform (DCT)) may be used. The quantization may divide data of the transformed frequency domain into several ranges and approximate values in each range to a specific value.

An entropy coder block 411 may compress data generated from the transform-quantization block 410. In this case, information of the prediction mode 401 may be included. The entropy coder block 411 may encode data based on generation frequency, probability, etc. of the data, and any known encoding technique (for example, Huffman coding, Arithmetic coding, etc.) may be used. A bitstream may be output from the entropy coder block 411.

A rate calculator block 412 may calculate a bit rate R output from the entropy coder block 411. R may include a bit of mode (or header) information and a bit of transform coefficient information.

An inverse transform-dequantization block (IT-DQ) 413 may inversely transform and dequantize data generated from the transform-quantization block 410. Therefore, the inverse transform-inverse quantization block 413 may output reconstructed residual data (RES').

A distortion calculator block 414 may calculate distortion between the input residual data (RES) 402 and the reconstructed residual data (RES'). The distortion calculator block 414 may calculate distortion D, for example, through Sum of Squared Differences (SSD).

An RD cost calculator block 415 may calculate final RD cost 403 based on R, D, and a predefined Lagrange multiplier.

The electronic device may perform the above-described operations for each of arbitrary input modes and decide optimal parameters for minimizing RD cost.

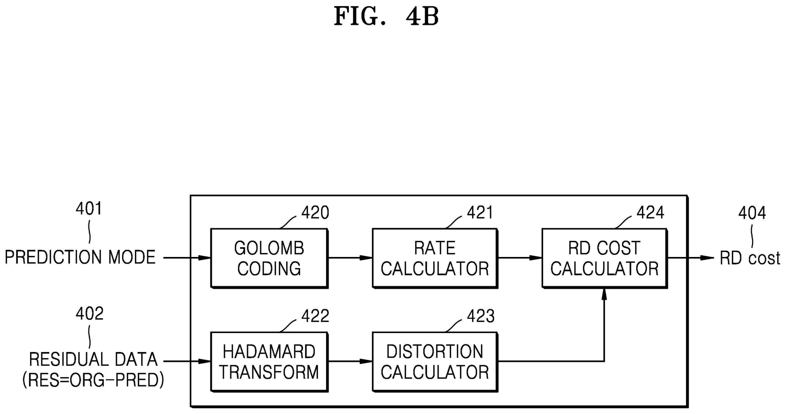

FIG. 4B is a block diagram for describing an operation of calculating RD cost in general LC-RDO.

Referring to FIG. 4B, blocks representing modules for calculating RD cost 404 in the general LC-RDO are shown. In a general LC-RDO process, RD cost 404 may be calculated based on a prediction mode 401 and residual data 402. The general LC-RDO may require a relatively smaller amount of computation and a shorter processing time than the general RDO shown in FIG. 4A. Therefore, compression efficiency of the LC-RDO may be relatively lower than that of the RDO, and the RD cost 404 of the LC-RDO may be a different value from the RD cost 403 of the RDO.

Transform-quantization and inverse transform-dequantization used in the RDO may require a large amount of computation, and entropy coding may require a long processing time due to sequential processing. In the LC-RDO, Golomb coding may be used to replace entropy coding, and Hadamard transformation may be used to replace transform-quantization and inverse transform-dequantization.

A Golomb coding block 420 may compress data and generate a bitstream by using Golomb coding which is a lossless data compression method. The Golomb coding assumes a distribution in which as an absolute value increases from 0, generation probability of input data is geometrically reduced, and may output a bitstream by compressing a probability interval in which data exists with a prefix code and compressing values in the interval with a suffix code.

A rate calculator block 421 may calculate a bit rate R output from the Golomb coder block 420.

A Hadamard transform block 422 may transform input data by using a Hadamard kernel (matrix). A general formula of the Hadamard kernel is known and is therefore omitted in the present disclosure. The Hadamard kernel may vary in size. For example, the Hadamard kernel may have a size of 1x1, 2x2, 4x4, 8x8, etc., but is not limited thereto.

A distortion calculator block 423 may calculate distortion between the input residual data (RES) 402 and Hadamard transformed residual data. Meanwhile, in the LC-RDO, Hadamard transform may be omitted. In this case, the distortion calculator block 423 may also calculate distortion D through a Sum of Absolute Differences SAD of the residual data.

A RD cost calculator block 424 may calculate final RD cost 404 based on R and D and a predefined Lagrange multiplier $\lambda$.

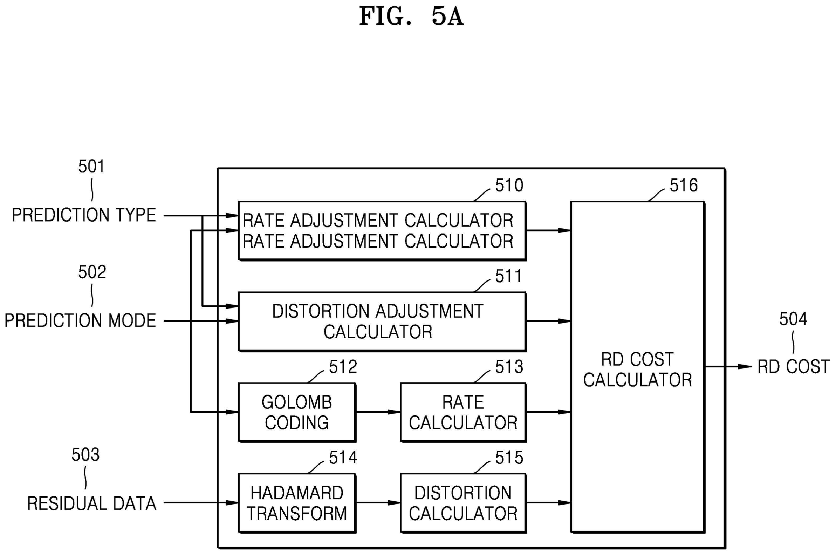

FIG. 5A is a block diagram for describing an RD cost calculation operation in LC-RDO used by an electronic device according to an embodiment of the present disclosure.

The electronic device may calculate RD cost 504 for each prediction mode to decide an optimal prediction mode for a block. In this case, the electronic device may improve performance of LC-RDO by applying a correction value.

Referring to FIG. 5A, blocks representing modules for calculating RD cost 504 in the electronic device are shown.

In an embodiment, when the electronic device performs LC-RDO, the electronic device may use a rate correction value for correcting a rate and a distortion correction value for correcting distortion. To this end, the electronic device may perform computational operations for searching an optimal coding parameter . The optimization coding parameter may be calculated by Equation 3 below.

[Equation 3]

$$\theta^{**} = \arg \min_{\{\theta\}} J,$$

where $J = D + D' + \lambda(R + R')$

Here, J represents rate-distortion cost (RD Cost) considering weights of a rate R and distortion D, and $\lambda$ is a Lagrangian multiplier which is a coefficient depending on a quantization parameter. D' represents a distortion correction value, and R' represents a rate correction value.

In an embodiment, the electronic device may further use data regarding a prediction type 501 of a block, in addition to using data regarding a prediction mode 502 and residual data 503, to calculate a correction value. More specifically, a rate adjustment calculator block 510 may calculate a rate correction value R' corresponding to the prediction type 501 and prediction mode 502 of the block. Additionally, a distortion adjustment calculator block 511 may calculate a distortion correction value D' corresponding to the prediction type 501 and prediction mode 502 of the block.

A Golomb coding block 512 may compress data and a rate calculator block 513 may calculate a bit rate R. A Hadamard transform block 514 may transform input data by using a Hadamard kernel (matrix), and a distortion calculator block 515 may calculate distortion D. Operations of the Golomb coding block 512, the rate calculator block 513, the Hadamard transform block 514, and the distortion calculator block 515 may correspond to operations of general LC-RDO.

The RD cost calculator block 516 may calculate final RD cost 504 based on the bit rate R, the rate correction value R', the distortion D, the distortion correction value D', and the Lagrange multiplier $\lambda$.

The electronic device may use LC-RDO using the rate correction value R' and the distortion correction value D', thereby obtaining improved compression performance compared to the method using the general LC-RDO.

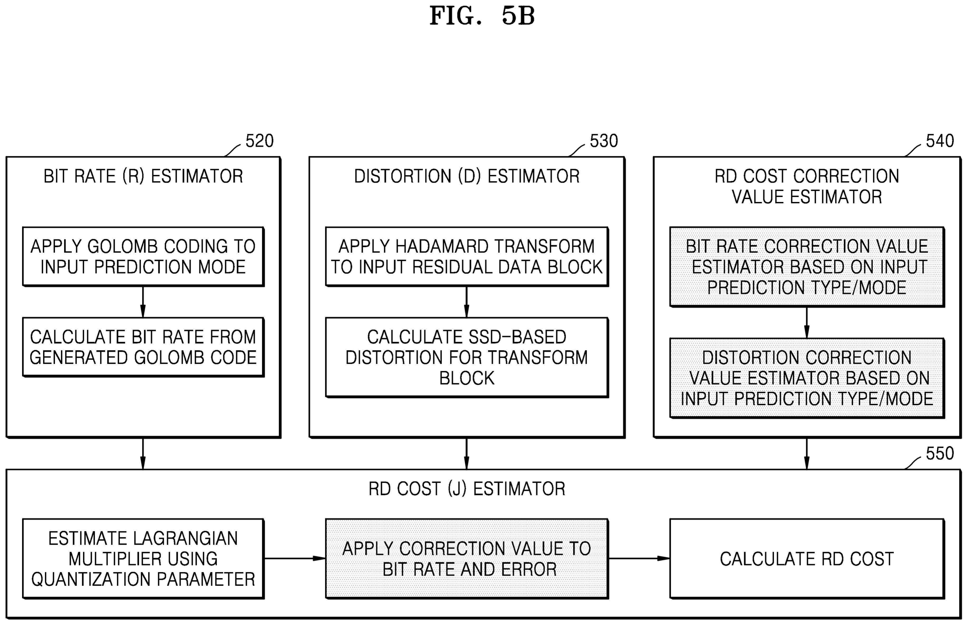

FIG. 5B is a flowchart for describing an RD cost calculation operation in LC-RDO used by an electronic device according to an embodiment of the present disclosure.

FIG. 5B is provided for supplementary explanation of the LC-RDO using the rate correction value R' and distortion correction value D' of FIG. 5A.

An operation of a bit rate estimator 520 may correspond to the Golomb coding block 512 and the rate calculator block 513 of FIG. 5A. The bit rate estimator 520 may apply Golomb coding to an input prediction mode and calculate a bit rate R from a generated Golomb code.

An operation of a distortion estimator 530 may correspond to the Hadamard transform block 514 and the distortion calculator block 515 of FIG. 5A. The distortion estimator 530 may apply Hadamard transform to an input residual data block and calculate distortion D for the transformed block based on SSD.

An operation of an RD cost adjustment estimator 540 may correspond to the rate adjustment calculator block 510 and the distortion adjustment calculator block 511 of FIG. 5A. The RD cost adjustment estimator 540 may calculate a bit rate correction value R' based on an input prediction type/mode and calculate a distortion correction value D' based on the input prediction type/-mode.

An operation of an RD cost estimator 550 may correspond to the RD cost calculator block 516 of FIG.

5A. The RD cost estimator 550 may calculate a Lagrangian multiplier using a quantization parameter and calculate RD cost J (J=D+D'+λ(R+R')).

The electronic device may use LC-RDO using the rate correction value R' and the distortion correction value D', thereby securing improved compression performance compared to the method using the general LC-RDO.

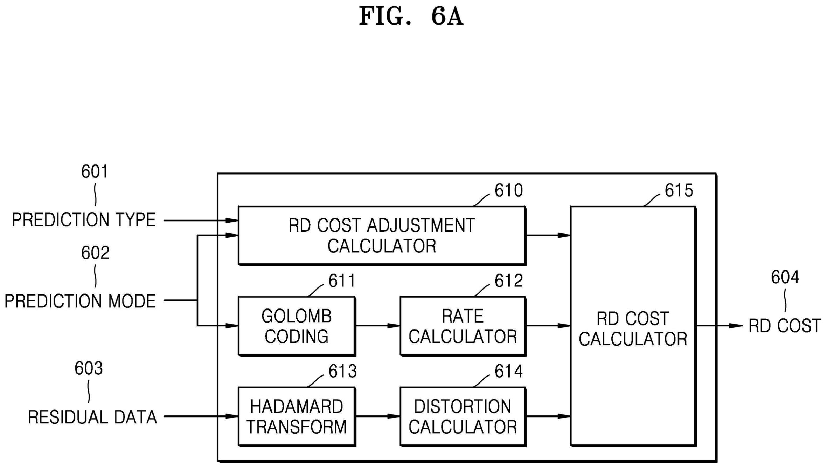

FIG. 6A is a block diagram for describing an RD cost calculation operation in LC-RDO used by an electronic device according to an embodiment of the present disclosure.

Referring to FIG. 6A, blocks representing modules for calculating RD cost 604 in the electronic device are shown.

In an embodiment, the electronic device may use a correction value that corrects rate-distortion cost (RD cost) when performing LC-RDO. To this end, the electronic device may perform computational operations for searching an optimal coding parameter . The optimization coding parameter may be calculated by Equation 4 below.

[Equation 4]

$$\theta^{***} = \arg\min_{\{\theta\}} J,$$

where $J = D + \lambda R + J'$

Here, J represents rate-distortion cost (RD Cost) considering weights of a rate R and distortion D, and λ is a Lagrangian multiplier which is a coefficient depending on a quantization parameter. J' represents a RD cost correction value.

In an embodiment, the electronic device may further use data regarding a prediction type 601 of a block, in addition to data regarding a prediction mode 602 and residual data 603, in order to calculate a correction value. More specifically, an RD cost adjustment calculator block 610 may calculate an RD cost correction value J' corresponding to a prediction type 501 and a prediction mode 502 of a block.

A Golomb coding block 611 may compress data, and a rate calculator block 612 may calculate a bit rate R. A Hadamard transform block 613 may transform input data using a Hadamard kernel (matrix), and a distortion calculator block 614 may calculate distortion D. Here, operations of the Golomb coding block 611, the rate calculator block 612, the Hadamard transform block 613, and the distortion calculator block 614 may correspond to the operations of the general LC-RDO.

The RD cost calculator block 615 may calculate final RD cost 604 based on the bit rate R, the distortion D, the RD cost correction value J', and the Lagrange multiplier λ.

The electronic device may use LC-RDO using the rate-distortion correction value J', thereby securing improved compression performance compared to the method using the general LC-RDO.

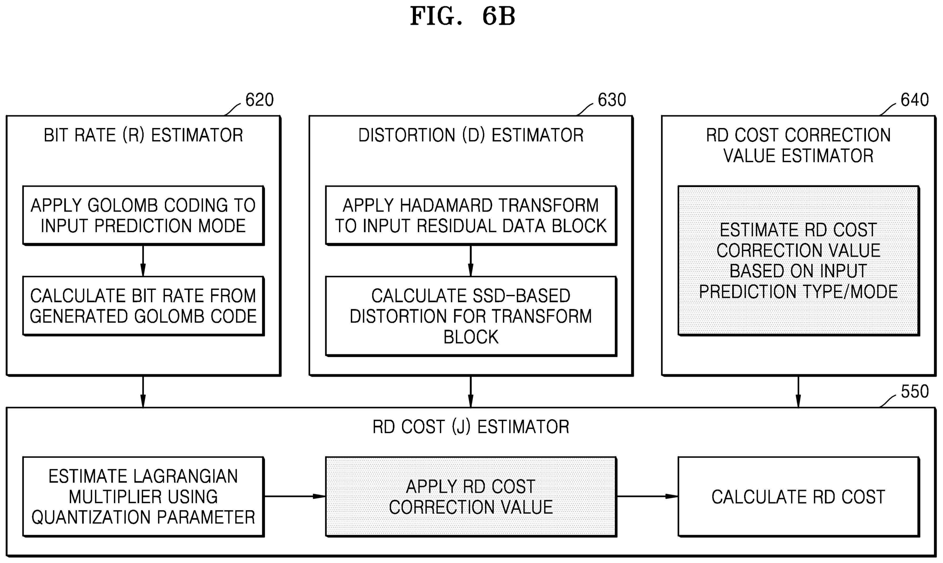

FIG. 6B is a block diagram for describing an RD cost calculation operation in LC-LC-RDO used by an electronic device according to an embodiment of the present disclosure.

FIG. 6B is provided for supplementary explanation of LC-RDO using the rate correction value R' and the distortion correction value D' of FIG. 6A.

An operation of a bit rate estimator 620 may correspond to the Golomb coding block 611 and the rate calculator block 612 of FIG. 6A. The bit rate estimator 620 may apply Golomb coding to an input prediction mode and calculate a bit rate R from a generated Golomb code.

An operation of a distortion estimator 630 may correspond to the Hadamard transform block 613 and the distortion calculator block 614 of FIG. 6A. The distortion estimator 630 may apply Hadamard transform to an input residual data block and calculate distortion D for the transformed block based on SSD.

An operation of an RD cost adjustment estimator 640 may correspond to the RD cost adjustment calculator block of FIG. 6A. The RD cost adjustment estimator 640 may calculate an RD cost correction value J' based on an input prediction type/mode.

An operation of an RD cost estimator 660 may correspond to the RD cost calculator block 615 of FIG. 6A. The RD cost estimator 660 may calculate a Lagrangian multiplier using a quantization parameter and calculate RD cost J (J=D+λR+J').

The electronic device may use LC-RDO using a rate-distortion correction value J', thereby securing improved compression performance compared to the method using the general LC-RDO.

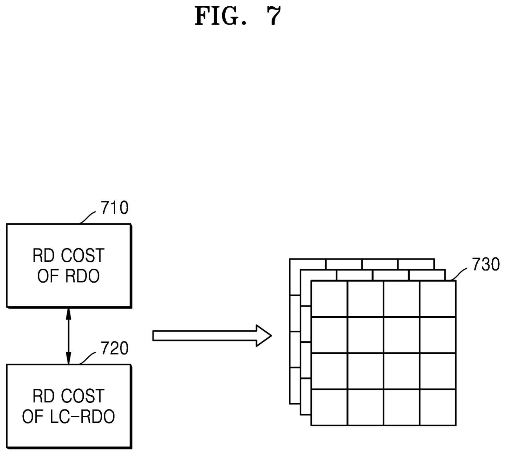

FIG. 7 is a diagram for describing an operation of pre-calculating correction values of LC-RDO in an electronic device according to an embodiment of the present disclosure.

In an embodiment, correction values used by the electronic device in the LC-RDO may be pre-calculated. For example, the electronic device may pre-calculate a rate correction value R', a distortion correction value D', and a RD cost correction value J'.

In an embodiment, the electronic device may calculate RD cost 710 of RDO for each mode/type. An operation of calculating the RD cost 710 of RDO when the electronic device performs the RDO has been described above with reference to FIG. 4A, and therefore, overlapping descriptions will be omitted.

In an embodiment, the electronic device may calculate RD cost 720 of LC-RDO for each mode/type. An operation of calculating the RD cost 720 of LC-RDO when the electronic device performs the LC-RDO has been described above with reference to FIG. 4B, and therefore, overlapping descriptions will be omitted.

Meanwhile, calculating the RD cost 710 of RDO may require a relatively larger amount of computation than calculating the RD cost 720 of LC-RDO. Accordingly, the electronic device may also receive data generated during a process of calculating the RD cost 710 of RDO from an external device (for example, a server).

In an embodiment, the electronic device may generate a lookup table 730 that stores correction values calculated in advance based on values obtained in a process of calculating the RD cost 710 of RDO and the RD cost 720 of LC-RDO.

For example, the electronic device may pre-calculate a rate correction value R' based on a difference between a rate R1 calculated in the RDO method and a rate R2 calculated in the LC-RDO method. The electronic device may store the calculated rate correction values R' and generate the lookup table 730 corresponding to the rate correction values R'.

For example, the electronic device may pre-calculate a distortion correction value D' based on a difference between distortion D1 calculated in the RDO method and distortion D2 calculated in the LC-RDO method. The electronic device may generate the lookup table 730 corresponding the calculated distortion correction value D' by storing the distortion correction value D'.

For example, the electronic device may pre-calculate a RD correction value D' based on a difference between RD cost J1 calculated in the RDO method and RD cost J2 calculated in the LC-RDO method. The electronic device may generate the lookup table 730 corresponding to the calculated distortion correction value D' by storing the distortion correction value D'.

In an embodiment, when the electronic device applies LC-RDO, the electronic device may apply a correction value that corrects at least one of a rate, distortion, or rate-distortion cost based on the pre-calculated lookup table.

For example, the electronic device may apply a rate correction value R' for correcting a rate and a distortion correction value D' for correcting distortion based on the pre-calculated lookup table.

For example, the electronic device may apply an RD cost correction value J' that corrects RD cost based on the pre-calculated lookup table.

In an embodiment, the lookup table 730 obtained by pre-calculating the rate correction value R', the distortion correction value D', and the RD cost correction value J' may be generated by various methods. For example, the lookup table 730 may be generated by using a reinforcement learning method. In this case, a reinforcement learning agent may be designed to perform an action of deciding correction values R', D', and J', and learn a policy to search optimal correction values based on a reward designed to encode blocks, observe an encoding result (for example, a decided prediction mode, compression efficiency, etc.), and improve the encoding result.

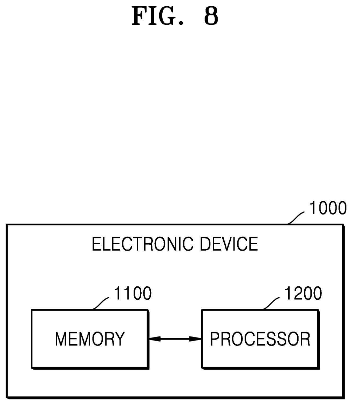

FIG. 8 is a block diagram illustrating a configuration of an electronic device according to an embodiment of the present disclosure.

In an embodiment, an electronic device 1000 may include memory 1100 and a processor 1200.

The memory 1100 may store instructions, data structures, and program codes that may be read by the processor 1200. The memory 1100 may be one or more pieces of memory. In the disclosed embodiments, operations performed by the processor 1200 may be implemented by executing instructions or codes of a program stored in the memory 1100.

The memory 1100 may include non-volatile memory, such as Read-only memory (ROM) (for example, Programmable read-only memory (PROM), Erasable programmable read-only memory (EPROM), and Electrically erasable programmable read-only memory (EEPROM)), flash memory (for example, memory card and Solid-state drive (SSD)), and analog recording type (for example, Hard disk drive (HDD), magnetic tape, and optical disk), and volatile memory, such as Random-access memory (RAM) (for example, Dynamic random-access memory (DRAM) and Static random-access memory (SRAM)).

The memory 1100 may store data, instructions, and programs that enable the electronic device 1000 to perform video encoding to which LC-RDO using a correction value is applied.

The processor 1200 may control overall operations of the electronic device 1000. The processor 1200 may perform operations of the electronic device 1000, described above with reference to the previous drawings. For example, the processor 1200 may execute one or more instructions of a program stored in the memory 1100 to control overall operations of the electronic device 1000 to perform video encoding to which LC-RDO using a correction value is applied. One or more processors 120 may be provided.

In an embodiment, the one or more processors 1200 may include at least one of a Central Processing Unit (CPU), a Graphics Processing Unit (GPU), an Accelerated Processing Unit (APU), a Many Integrated Core (MIC), a Digital Signal Processor (DSP), or a Neural Processing Unit (NPU). The one or more processors 1200 may be implemented in a form of an integrated System on a Chip (SoC) including one or more electronic components. Each of the one or more processors 1200 may be implemented as separate hardware (H/W).

When the method according to an embodiment of the present disclosure includes a plurality of operations, the plurality of operations may be performed by one processor 1200 or by a plurality of processors 1200. For example, when a first operation, a second operation, and a third operation are performed by the method according to an embodiment, the first operation, the second operation, and the third operation may all be performed by a first processor, or the first operation and the second operation may be performed by the first processor (for example, a general-purpose processor) while the third operation may be performed by a second processor (for example, an artificial intelligence (AI)-dedicated processor). Here, an example of the second processor may be an AI-

dedicated processor, and the AI-dedicated processor may perform operations for training/inference of an AI model. However, the embodiments of the present disclosure are not limited thereto.

The one or more processors 1200 according to the present disclosure may be implemented as a single-core processor or as a multi-core processor.

In the case in which the method according to an embodiment of the present disclosure includes a plurality of operations, the plurality of operations may be performed by a single core or by a plurality of cores included in the one or more processors.

Meanwhile, although not shown in FIG. 8, the electronic device 1000 may further include additional components to perform the operations described in the above-described embodiments. For example, the electronic device 1000 may further include a display, a camera, etc. However, the additional components of the electronic device 1000 are not limited thereto. The electronic device 1000 may further include components for performing operations related to video processing including video encoding, such as acquiring, generating, and playing back a video.

The present disclosure may suggest a video encoding method of improving performance of LC-RDO by using various types of correction values, and an electronic device for performing video encoding. More specifically, a method capable of improving compression performance without increasing computational complexity by applying a correction value corresponding to a type/mode of a coding block in a low-complexity rate-distortion optimization LC-RDO process of video encoding may be provided. The technical object intended to be achieved by the present disclosure is not limited to the above-mentioned technical objects, and other technical objects not mentioned will be clearly understood by one of ordinary skill in the technical art to which the disclosure belongs from the description of the present specification.

According to an aspect of the present disclosure, a method of encoding a video may be provided.

The method may include partitioning an image frame into a Coding Tree Unit (CTU).

The method may include deciding prediction mode candidates of the coding tree unit by applying first Low Complexity Rate-Distortion Optimization (LC-RDO).

The first LC-RDO may include applying a first correction value for correcting at least one of a rate, distortion, or rate-distortion cost.

The method may include deciding a prediction mode from among the prediction mode candidates by applying second LC-RDO.

The second LC-RDO may include applying a second correction value for correcting at least one of the rate, distortion, or rate-distortion cost.

The method may include generating a bitstream based on the decided prediction mode.

The first correction value and the second correction value may be applied based on a pre-calculated lookup table.

The pre-calculated lookup table may be generated based on a difference between rate-distortion cost of Rate-Distortion Optimization (RDO) and rate-distortion cost of Low Complexity Rate-Distortion Optimization (LC-RDO), wherein the rate-distortion cost of the RDO is calculated by applying the RDO to an encoding process and the rate-distortion cost of the LC-RDO is calculated by applying the LC-RDO to the encoding process.

The first LC-RDO may include applying a first rate correction value for correcting a rate and a first distortion correction value for correcting distortion.

The second LC-RDO may include applying a second rate correction value for correcting the rate and a second distortion correction value for correcting the distortion.

The first LC-RDO may include applying a first rate-distortion cost correction value for correcting the rate-distortion cost.

The second LC-RDO may include applying a second rate-distortion cost correction value for correcting the rate-distortion cost.

The method may include determining whether to partition the coding tree unit into a plurality of coding units.

A determination of whether to partition each of the coding units may be recursively performed until an optimal prediction mode of each of the coding units is decided.

The determining of whether to partition the coding tree unit into the plurality of coding units may include determining whether to partition the coding tree unit by applying third LC-RDO.

The third LC-RDO may include applying a third correction value for correcting at least one of the rate, distortion, or rate-distortion cost.

The generating of the bitstream based on the decided prediction mode may include generating pixel data of a syntax element and a reconstructed block for generating the bitstream by performing encoding-decoding by using the decided prediction mode.

The method may include applying a post filter to the reconstructed block.

The method may include storing pixel data of a reconstructed block to which the post filter has been applied in a buffer.

Applying the post filter to the reconstructed block may include deciding a type and mode of the post filter by applying fourth LC-RDO.

The fourth LC-RDO may include applying a fourth correction value for correcting at least one of the rate, distortion, or rate-distortion cost.

According to an aspect of the present disclosure, an electronic device for encoding a video may be provided.

The electronic device may include memory storing one or more instructions; and one or more processors configured to execute the one or more instructions stored in the memory.

The one or more processors may be configured to execute the one or more instructions to partition an image frame into a coding tree unit (CTU).

The one or more processors may be configured to execute the one or more instructions to decide prediction mode candidates of the coding tree unit by applying first Low Complexity Rate-Distortion Optimization (LC-RDO).

The first LC-RDO may include applying a first correction value for correcting at least one of a rate, distortion, or rate-distortion cost.

The one or more processors may be configured to execute the one or more instructions to decide a prediction mode from among the prediction mode candidates by applying second LC-RDO.

The second LC-RDO may include applying a second correction value for correcting at least one of the rate, distortion, or rate-distortion cost.

The one or more processors may be configured to execute the one or more instructions to generate a bitstream based on the decided prediction mode.

The first correction value and the second correction value may be applied based on a pre-calculated lookup table.

The pre-calculated look-up table may be generated based on a difference between rate-distortion cost of Rate-Distortion Optimization (RDO) and rate-distortion cost of Low Complexity Rate-Distortion Optimization (LC-RDO), wherein the rate-distortion cost of the RDO is calculated by applying the RDO to an encoding process and the rate-distortion cost of the LC-RDO is calculated by applying the LC-RDO to the encoding process.

The first LC-RDO may include applying a first rate correction value for correcting the rate and a first distortion correction value for correcting the distortion.

The second LC-RDO may include applying a second rate correction value for correcting the rate and a second distortion correction value for correcting the distortion.

The first LC-RDO may include applying a first rate-distortion cost correction value for correcting the rate-distortion cost.

The second LC-RDO may include applying a second rate-distortion cost correction value for correcting the rate-distortion cost.

The one or more one processor may be configured to execute the one or more instructions to determine whether to partition the coding tree unit into a plurality of coding units.

In the determining of whether to partition the coding tree unit into the plurality of coding units, a determination of whether to partition each of the coding units may be recursively performed until an optimal prediction mode of each of the coding units is decided.

The one or more processors may be configured to execute the one or more instructions to determine whether to partition the coding tree unit by applying third LC-RDO.

The third LC-RDO may include applying a third correction value for correcting at least one of the rate, distortion, or rate-distortion cost.

The one or more processors may be configured to execute the one or more instructions to generate pixel data of a syntax element and a reconstructed block for generating the bitstream by performing encoding-decoding by using the decided prediction mode.

The one or more processors may be configured to execute the one or more instructions to apply a post filter to the reconstructed block.

The one or more processors may be configured to execute the one or more instructions to store pixel data of a reconstructed block to which the post filter has been applied in a buffer.

The one or more processors may be configured to execute the one or more instructions to decide a type and mode of the post filter by applying fourth LC-RDO.

The fourth LC-RDO may include applying a fourth correction value for correcting at least one of the rate, distortion, or rate-distortion cost.

Meanwhile, the embodiments of the present disclosure may be implemented in the form of a recording medium including an instruction that is executable by a computer, such as a program module that is executed by a computer. The computer-readable recording medium may be an arbitrary available medium which is able to be accessed by a computer, and may include a volatile or non-volatile medium and a separable or non-separable medium. Further, the computer-readable recording medium may include a computer storage medium and a communication medium. The computer storage medium may include volatile and non-volatile media and separable and non-separable media implemented by an arbitrary method or technology for storing information, such as computer-readable instructions, data structures, program modules or other data. The communication medium may include other data of modulated data signals, such as computer-readable instructions, data structures, or program modules.

Also, the computer-readable storage media may be provided in the form of a non-transitory storage medium. Herein, the term 'non-transitory storage medium' simply means that the storage medium is a tangible device, and does not include a signal (e.g., an electromagnetic wave), but this term does not differentiate between where data is semi-permanently stored in the storage medium and where the data is temporarily stored in the storage medium. For example, the 'non-transitory storage medium' may include a buffer in which data is temporarily stored.

According to an embodiment, the method according to various embodiments disclosed in the present document may be included in a computer program product and provided. The computer program product may be traded as a product between a seller and a buyer. The computer program product may be distributed in the form of a machine-readable storage medium (e.g., compact disc read only memory (CD-ROM)), or be distributed (e.g., downloadable or uploadable) online via an application store or between two user devices (e.g., smart phones) directly. When distributed online, at least part of the computer program product (e.g., a downloadable app) may be temporarily generated or at least temporarily stored in the machine-readable storage medium, such as a memory of the manufacturer's server, a server of the application store, or a relay server.

The aforementioned descriptions of the present disclosure are only for illustrative purposes, and it will be understood by those of ordinary skill in the technical art to which the present disclosure belongs that different modifications are possible without changing the technical spirit and essential features of the present disclosure. Thus, it should be understood that the embodiments described above are merely for illustrative purposes and not for limitation purposes in all aspects. For example, each component described as a single type may be implemented in a distributed type, and components described as distributed may be implemented in a combined form.

The scope of the present disclosure would be indicated by the claims which will be described below rather than the above detailed description, the spirit and scope of the claims, and all such modifications as would be derived from the equivalent concept intended to be included within the scope of the present disclosure.

**Claims**

1.  A method of encoding a video, the method comprising:

    partitioning an image frame into a coding tree unit (CTU);
    deciding prediction mode candidates of the coding tree unit by applying first low complexity rate-distortion optimization (LC-RDO), wherein the first LC-RDO includes applying a first correction value for correcting at least one of a rate, distortion, or rate-distortion cost;
    deciding a prediction mode from among the prediction mode candidates by applying second LC-RDO, wherein the second LC-RDO includes applying a second correction value for correcting at least one of the rate, distortion, or rate-distortion cost; and
    generating a bitstream based on the decided prediction mode.

2.  The method of claim 1, wherein the first correction value and the second correction value are applied based on a pre-calculated lookup table.

3.  The method of claim 2, wherein the pre-calculated lookup table is generated based on a difference between a rate-distortion cost of rate-distortion optimization (RDO) and a rate-distortion cost of low complexity rate-distortion optimization (LC-RDO), wherein the rate-distortion cost of the RDO is calculated by applying the RDO to an encoding process and the rate-distortion cost of the LC-RDO is calculated by applying the LC-RDO to the encoding process.

4.  The method of any one of claims 1 to 3, wherein

    the first LC-RDO includes applying a first rate correction value for correcting a rate and a first distortion correction value for correcting distortion, and
    the second LC-RDO includes applying a second rate correction value for correcting the rate and a second distortion correction value for correcting the distortion.

5.  The method of any one of claims 1 to 3, wherein

    the first LC-RDO includes applying a first rate-distortion cost correction value for correcting the rate-distortion cost, and
    the second LC-RDO includes applying a second rate-distortion cost correction value for correcting the rate-distortion cost.

6.  The method of any one of claims 1 to 5,

    further comprising
    determining whether to partition the coding tree unit into a plurality of coding units,
    wherein a determination of whether to partition each of the coding units is recursively performed until an optimal prediction mode of each of the coding units is decided.

7.  The method of claim 6, wherein

    the determining of whether to partition the coding tree unit into the plurality of coding units comprises
    determining whether to partition the coding tree unit by applying third LC-RDO, wherein the third LC-RDO includes applying a third correction value for correcting at least one of the rate, distortion, or rate-distortion cost.

8.  An electronic device for encoding a video, the electronic device comprising:

    memory storing one or more instructions; and
    one or more processors configured to execute the one or more instructions stored in the memory, wherein
the one or more processors are configured to execute the one or more instructions to
partition an image frame into a coding tree unit (CTU),
decide prediction mode candidates of the coding tree unit by applying first low complexity rate-distortion optimization (LC-RDO), wherein the first LC-RDO includes applying a first correction value for correcting at least one of a rate, distortion, or rate-distortion cost,
decide a prediction mode from among the prediction mode candidates by applying second LC-RDO, wherein the second LC-RDO includes applying a second correction value for correcting at least one of the rate, distortion, or rate-distortion cost, and
generate a bitstream based on the decided prediction mode.

9. The electronic device of claim 8, wherein
the first correction value and the second correction value are applied based on a pre-calculated lookup table.

10. The electronic device of claim 9, wherein

the pre-calculated look-up table is generated based on a difference between a rate-distortion cost of rate-distortion optimization (RDO) and a rate-distortion cost of low complexity rate-distortion optimization (LC-RDO), wherein the rate-distortion cost of the RDO is calculated by applying the RDO to an encoding process and the rate-distortion cost of the LC-RDO is calculated by applying the LC-RDO to the encoding process.

11. The electronic device of any one of claims 8 to 10, wherein

the first LC-RDO includes applying a first rate correction value for correcting the rate and a first distortion correction value for correcting the distortion, and
the second LC-RDO includes applying a second rate correction value for correcting the rate and a second distortion correction value for correcting the distortion.

12. The electronic device of any one of claims 8 to 10, wherein

the first LC-RDO includes applying a first rate-distortion cost correction value for correcting the rate-distortion cost, and
the second LC-RDO includes applying a second rate-distortion cost correction value for correcting the rate-distortion cost.

13. The electronic device of any one of claims 8 to 12, wherein

the one or more processors are configured to execute the one or more instructions to determine whether to partition the coding tree unit into a plurality of coding units, wherein a determination of whether to partition each of the coding units is recursively performed until an optimal prediction mode of each of the coding units is decided.

14. The electronic device of claim 13, wherein

the one or more processors are configured to execute the one or more instructions to determine whether to partition the coding tree unit by applying third LC-RDO, wherein the third LC-RDO includes applying a third correction value for correcting at least one of the rate, distortion, or rate-distortion cost.

15. A computer-readable recording medium storing a program for executing the method of any one of claims 1 to 7 on a computer.

# FIG. 1

EP 4 738 822 A1

EP 4 738 822 A1

# FIG. 2A

FIG. 2B

# FIG. 2C

CTU 220

CU 230

QT  BT-H  BT-V  TT-H  TT-V

CU 230

# FIG. 3

```
                    ┌─────────┐
                    │  START  │
                    └────┬────┘
                         │
                         ▼
┌──────────────────────────────────────────────────────────────┐
│  PARTITION IMAGE FRAME INTO CODING TREE UNITS (CTUS)           │── S310
└──────────────────────────────┬───────────────────────────────┘
                                │
                                ▼
┌──────────────────────────────────────────────────────────────┐
│  DECIDE PREDICTION MODE CANDIDATES OF CODING TREE              │
│  UNIT BY APPLYING FIRST LOW COMPLEXITY RATE-DISTORTION         │── S320
│  OPTIMIZATION (LC-RDO) USING FIRST CORRECTION VALUE            │
└──────────────────────────────┬───────────────────────────────┘
                                │
                                ▼
┌──────────────────────────────────────────────────────────────┐
│  DECIDE PREDICTION MODE FROM AMONG PREDICTION MODE             │
│  CANDIDATES BY APPLYING SECOND LC-RDO USING SECOND             │── S330
│  CORRECTION VALUE                                              │
└──────────────────────────────┬───────────────────────────────┘
                                │
                                ▼
┌──────────────────────────────────────────────────────────────┐
│  GENERATE BITSTREAM BASED ON DECIDED PREDICTION MODE           │── S340
└──────────────────────────────┬───────────────────────────────┘
                                │
                                ▼
                          ┌─────────┐
                          │   END   │
                          └─────────┘
```

## FIG. 4A

EP 4 738 822 A1

401
PREDICTION MODE

402
RESIDUAL DATA
(RES=ORG−PRED)

| 410 | 411 | 412 | 415 |
|-----|-----|-----|-----|
| T−Q | ENTROPY CODER | RATE CALCULATOR | RD COST CALCULATOR |

403
RD COST

413
IT−DQ

414
DISTORTION CALCULATOR

FIG. 4B

EP 4 738 822 A1

**FIG. 5A**

- 501 PREDICTION TYPE
- 502 PREDICTION MODE
- 503 RESIDUAL DATA
- 510 RATE ADJUSTMENT CALCULATOR
- 511 DISTORTION ADJUSTMENT CALCULATOR
- 512 GOLOMB CODING
- 513 RATE CALCULATOR
- 514 HADAMARD TRANSFORM
- 515 DISTORTION CALCULATOR
- 516 RD COST CALCULATOR
- 504 RD COST

**FIG. 5B**

- 520 — BIT RATE (R) ESTIMATOR
  - APPLY GOLOMB CODING TO INPUT PREDICTION MODE
  - CALCULATE BIT RATE FROM GENERATED GOLOMB CODE
- 530 — DISTORTION (D) ESTIMATOR
  - APPLY HADAMARD TRANSFORM TO INPUT RESIDUAL DATA BLOCK
  - CALCULATE SSD-BASED DISTORTION FOR TRANSFORM BLOCK
- 540 — RD COST CORRECTION VALUE ESTIMATOR
  - BIT RATE CORRECTION VALUE ESTIMATOR BASED ON INPUT PREDICTION TYPE/MODE
  - DISTORTION CORRECTION VALUE ESTIMATOR BASED ON INPUT PREDICTION TYPE/MODE
- 550 — RD COST (J) ESTIMATOR
  - ESTIMATE LAGRANGIAN MULTIPLIER USING QUANTIZATION PARAMETER
  - APPLY CORRECTION VALUE TO BIT RATE AND ERROR
  - CALCULATE RD COST

EP 4 738 822 A1

# FIG. 6A

# FIG. 6B

**BIT RATE (R) ESTIMATOR** — 620

- APPLY GOLOMB CODING TO INPUT PREDICTION MODE
- CALCULATE BIT RATE FROM GENERATED GOLOMB CODE

**DISTORTION (D) ESTIMATOR** — 630

- APPLY HADAMARD TRANSFORM TO INPUT RESIDUAL DATA BLOCK
- CALCULATE SSD-BASED DISTORTION FOR TRANSFORM BLOCK

**RD COST CORRECTION VALUE ESTIMATOR** — 640

- ESTIMATE RD COST CORRECTION VALUE BASED ON INPUT PREDICTION TYPE/MODE

**RD COST (J) ESTIMATOR** — 550

- ESTIMATE LAGRANGIAN MULTIPLIER USING QUANTIZATION PARAMETER
- APPLY RD COST CORRECTION VALUE
- CALCULATE RD COST

EP 4 738 822 A1

# FIG. 7

# FIG. 8

ELECTRONIC DEVICE 1000

MEMORY 1100 ↔ PROCESSOR 1200

## INTERNATIONAL SEARCH REPORT

| International application No. |
| --- |
| **PCT/KR2024/011684** |

| A. | CLASSIFICATION OF SUBJECT MATTER |
| --- | --- |

**H04N 19/147**(2014.01)i; **H04N 19/119**(2014.01)i; **H04N 19/103**(2014.01)i; **H04N 19/70**(2014.01)i; **H04N 19/176**(2014.01)i; **H04N 19/117**(2014.01)i; **H04N 19/423**(2014.01)i; **H04N 19/85**(2014.01)i

According to International Patent Classification (IPC) or to both national classification and IPC

| B. | FIELDS SEARCHED |
| --- | --- |

Minimum documentation searched (classification system followed by classification symbols)

H04N 19/147(2014.01); H04N 19/11(2014.01); H04N 19/122(2014.01); H04N 19/124(2014.01); H04N 19/30(2014.01); H04N 19/50(2014.01); H04N 19/593(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: RDO(Rate-Distortion Optimization), LC-RDO(Low Complexity Rate-Distortion Optimization), 율(rate), 왜곡(distortion), 율-왜곡 비용(rate-distortion cost), 보정값(correction value)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | KR 10-2017-0021677 A (ELECTRONICS AND TELECOMMUNICATIONS RESEARCH INSTITUTE) 28 February 2017 (2017-02-28)<br>See paragraphs [0012], [0023] and [0051]. | 1-15 |
| A | KR 10-2015-0090803 A (KONKUK UNIVERSITY INDUSTRIAL COOPERATION CORP.) 06 August 2015 (2015-08-06)<br>See claim 1. | 1-15 |
| A | KR 10-1519557 B1 (INDUSTRY-ACADEMIC COOPERATION FOUNDATION, YONSEI UNIVERSITY) 13 May 2015 (2015-05-13)<br>See claims 2-3. | 1-15 |
| A | KR 10-2232049 B1 (KONKUK UNIVERSITY INDUSTRIAL COOPERATION CORP.) 24 March 2021 (2021-03-24)<br>See claims 1-2. | 1-15 |

| ✓ Further documents are listed in the continuation of Box C. | ✓ See patent family annex. |
| --- | --- |

| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| --- | --- |

| Date of the actual completion of the international search | Date of mailing of the international search report |
| --- | --- |
| **12 November 2024** | **12 November 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2024/011684** |

**C. DOCUMENTS CONSIDERED TO BE RELEVANT**

| Category* | Citation of document, with indication, where appropriate, of the relevant passages | Relevant to claim No. |
| --- | --- | --- |
| A | KR 10-2014-0072231 A (ELECTRONICS AND TELECOMMUNICATIONS RESEARCH INSTITUTE) 13 June 2014 (2014-06-13)<br>See paragraph [0018]. | 1-15 |

Form PCT/ISA/210 (second sheet) (July 2022)

## INTERNATIONAL SEARCH REPORT
### Information on patent family members

International application No.

**PCT/KR2024/011684**

| Patent document cited in search report | | | Publication date (day/month/year) | Patent family member(s) | | | Publication date (day/month/year) |
|---|---|---|---|---|---|---|---|
| KR | 10-2017-0021677 | A | 28 February 2017 | None | | | |
| KR | 10-2015-0090803 | A | 06 August 2015 | CN | 104785860 | A | 22 July 2015 |
| | | | | CN | 104785860 | B | 10 May 2017 |
| | | | | KR | 10-1580966 | B1 | 31 December 2015 |
| KR | 10-1519557 | B1 | 13 May 2015 | None | | | |
| KR | 10-2232049 | B1 | 24 March 2021 | KR 10-2020-0093189 | | A | 05 August 2020 |
| KR | 10-2014-0072231 | A | 13 June 2014 | US | 2014-0146884 | A1 | 29 May 2014 |

Form PCT/ISA/210 (patent family annex) (July 2022)